# EUROPEAN PATENT APPLICATION

(11) **EP 2 108 547 A1**
(43) Date of publication of application: **14.10.2009**
(21) Application number: 08103513.1
(22) Date of filing: 11.04.2008
(51) Int. Cl.: B60R 19/42, B60R 21/13

(54) **External airbag device disposed within impact absorbing and distributing panels in vehicles**

(71) Applicant: Fadillioglu, Tugrul, Istanbul 34760 (TR)
(72) Inventor: Fadillioglu, Tugrul, Istanbul 34760 (TR)
(74) Representative: Sevinç, Erkan

(57) **Abstract**

The present invention proposes an external airbag system in the form of an airbag arranged together with a compressed spring system clamped in between a pair of sheet-like element disposed on the chassis of the vehicle. The spring arrangement of the present invention is comprised of a pair of mechanically conjoined preferably cylindrical spring elements of steel obtained by thermal treatment and pressed to be sandwiched between said sheet-like elements. The panels between which airbags and pressed spring elements are disposed, are preferably made of PVC, polyurethane or reinforced sheet material. Airbags according to the present invention comprise reinforced fibers.

## Description

### Technical Field of the Invention

The present invention relates to an external airbag system adapted to be secured to the chassis of a vehicle to provide protection particularly against damages caused in case the vehicle overturns, i.e. a complete somersault.

### Background of the Invention

Airbags for absorbing the impact of a vehicle collision so as to provide a protective buffer zone for the occupants of a vehicle are widely known in the art. When an impact force exceeds a predetermined level, an airbag stored in its folded state is inflated and softens an impact of the occupants against the front panel of a vehicle. The infiltrator is operated in response to a signal output form a collision sensor in the airbag system.

The general term "external airbags" refers to airbags, which are pretty similar in principle to conventional in-vehicle airbags but which are disposed on the chassis, i.e. on an external surface of the vehicle. Those airbags aim at softening the impact of the vehicle against a pedestrian. JP 2005343198 discloses an external airbag of the above-mentioned type. The airbag device of JP 2005343198 is arranged in the form of an inflating airbag upon activation of which a plate-like door part is rotated around a hinge part to provide an airbag covering a surface portion of the chassis and/or windshield.

The present invention proposes an external airbag system which is capable of absorbing the impact of the serial shocks during a somersault in various locations of the chassis and/or windshields. The system, which can be implemented to the chassis of the vehicle in a space-saving manner, can thereby provide the protective effect on various chassis surfaces which can be adversely affected by the impact of a crash, somersault etc.

### Objects of the Invention

Primary object of the present invention is to provide an external airbag system which is disposable on various chassis parts of a vehicle in a space-saving manner so as to provide shock absorption effect particularly in case of collisions leading to serial somersaults.

### Summary of the Invention

The present invention proposes an external airbag system in the form of an airbag arranged together with a compressed spring system clamped in between a pair of sheet-like element disposed on the chassis of the vehicle. The spring arrangement of the present invention is comprised of a pair of mechanically conjoined preferably cylindrical spring elements of steel obtained by thermal treatment and pressed to be sandwiched between said sheet-like elements. The panels, between which airbags and pressed spring elements are disposed, are preferably made of PVC, polyurethane or reinforced sheet material. Airbags according to the present invention comprise reinforced fibers.

### Brief Description of the Figures

Accompanying drawings are given solely for the purpose of exemplifying an external airbag system whose advantages over prior art were outlined above and will be explained in detail hereinafter:
Fig. 1 demonstrates a principle view of the closed position of the two-panel structure according to the present invention.
Fig. 2a demonstrates opened position of the hinged two-panel structure of Fig. 1 with an airbag disposed between said panels.
Fig. 2b demonstrates opened position of the hinged two-panel structure of Fig. 1 with an extended airbag disposed between said panels.
Fig. 3a demonstrates cross-sectional view of mechanically conjoined cylindrical spring elements according to the present invention.
Fig. 3b demonstrates mechanically conjoined cylindrical spring elements of Fig. 3a in pressed form.
Fig. 4a demonstrates a sectional side view of the conjoined cylindrical spring elements along with airbags in activated position.
Fig. 4b1 and 4b2 respectively demonstrates a principle upper view of the inner structure of the two-panel structure with spring elements and a principle perspective view of the airbag comprising appropriate hollow divisions to accommodate said spring elements.
Fig. 4c demonstrates a sectional side view of the conjoined cylindrical spring elements along with airbags in pressed position as indicated by the arrows in Fig. 4b1.
Fig. 4d demonstrates wires to preserve integrity of protective sheets in deployed state according to the present invention.
Fig. 4e demonstrates formation of discontinuous channels at each side of an individual cylindrical spring element.
Fig. 4f demonstrates a locking element according to the present invention.
Fig. 5a and 5b demonstrates a perspective side view and a rear view of a vehicle in closed position with hinged chassis impact absorption panels having airbags.
Fig. 6a and 6b demonstrates a perspective side view and a rear view of the vehicle of Fig. 5 with opened absorption panels.
Fig. 7a and 7b demonstrates a perspective side view and a rear view of a vehicle in closed position with hinged chassis impact absorption panels having enlarged airbags.
Fig. 8a and 8b demonstrates a perspective side view and a rear view of the vehicle of Fig. 7 with opened absorption panels containing enlarged airbags so as to cover front, rear and side windows of said vehicle.
Fig. 9a and 9b demonstrates a perspective side view and a rear view of a vehicle in closed position with hingeless chassis impact absorption panels having airbags and spring elements.
Fig. 10a and 10b demonstrates a perspective side view and a rear view of the vehicle of Fig. 9 with opened absorption panels containing airbags and spring elements.
Fig. 11 a and 11 b demonstrates a perspective side view and a rear view of a vehicle in closed position with hingeless chassis impact absorption panels having enlarged airbags along with spring elements.
Fig. 12a and 12b demonstrates a perspective side view and a rear view of the vehicle of Fig. 11 with opened absorption panels containing enlarged airbags so as to cover front, rear and side windows along with spring elements.

### Detailed Description of the Invention

Referring now to the figures outlined above, the present invention proposes an external protection shield adapted to provide improved impact absorption effect for vehicles. The protective effect arises especially during a somersault which produces serial various intensity impacts on separate chassis portions. The present invention therefore proposes an improved safety for occupants of a vehicle in case of a car accident of the mentioned type, which is one of the most serious accident cases subject to mortality risk.

The present invention provides an airbag disposed within a pair of sheet-like planar elements (11). The airbag is conventionally activated and inflated in response to a signal output from a collision sensor. It can conventionally contain pressurized gas, liquid, gel, instant hardening foam and combinations thereof. Airbags according to the present invention comprise reinforced fibers. The activation of the protective systems according to the present invention may also rely on more sophisticated sensors such as a Doppler sensor, based on a relative velocity evaluation algorithm.

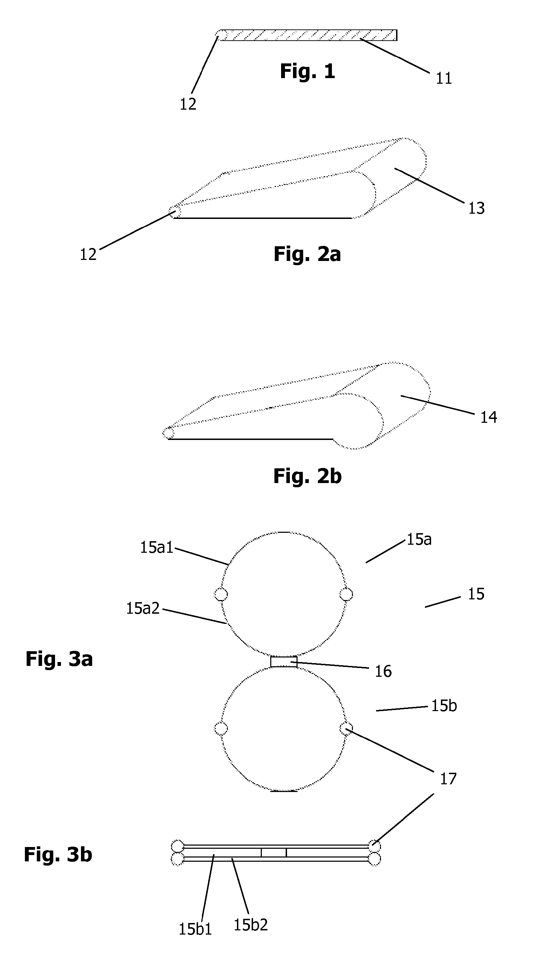

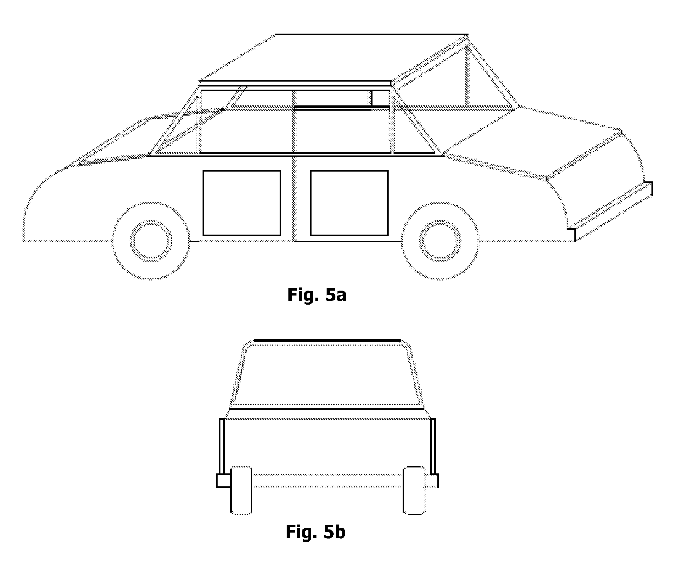

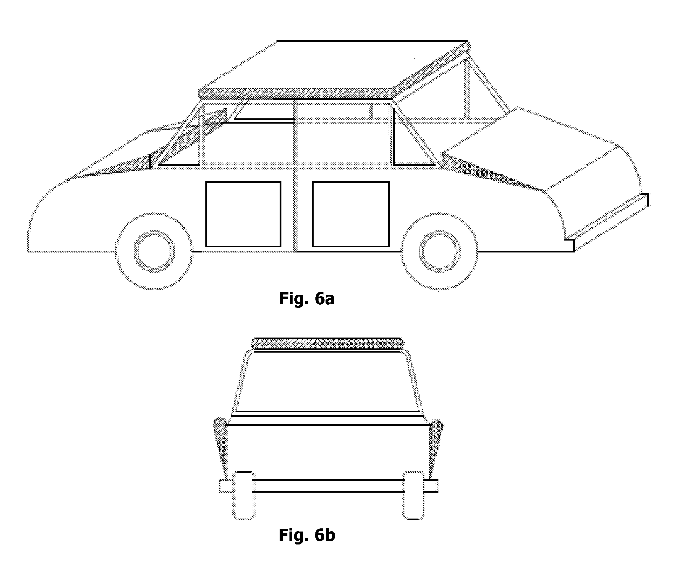

The planar elements in Fig. 1a are preferably made of PVC, polyurethane or any reinforced sheet material such as an alloy composition of steel sheet material, which are available on the market. As seen in Fig. 2a and 2b, said sheets (11) are hinged at one end (12) and have a further openable end (13) for providing space during expansion of the airbag (14). When airbag expansion takes place, upper sheet of the sandwich structure rotates around fixed-end hinge (12) to compensate expansion of the airbag (14). Figures 5 to 6 demonstrate such a system before and after activation.

Each sheet-like element (11) comprises steel wire meshes (not shown) onto which said sheet-like elements (11) are directly implemented or injected. Said steel wire meshes provide the effect of maintaining the integrity of the sheet-like elements (11) in case of a collision so that the sheet-like elements (11) do not disintegrate even if broken.

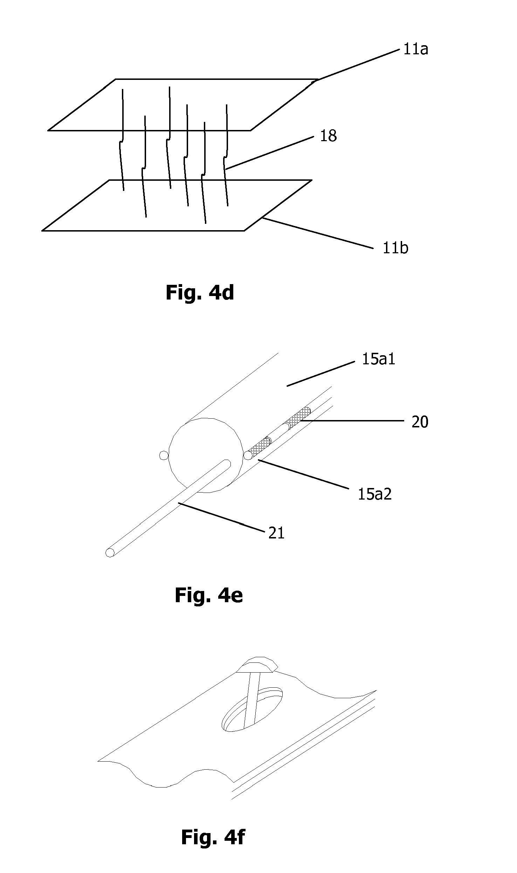

Each sheet-like element (11) is bonded to the corresponding upper or lower sheet-like element (11) by a plurality of wires (18) securing inner surfaces of each sheet (11 a) to each other at appropriate locations. Said wires (18) are comprised of high tensile strength filament yarns. They provide the effect that each pair of sheet-like element (11) is maintained secured to the respective sheet (11) in the deployed state of the system. Said wires having elastic properties, allow displacement of the upper sheet (11 a) with respect to the lower sheet (11 b) during activation of the system, but preserve the tie thereof due to their high tensile strength. They preferably have an extended length of approximately 15 cm. Fig. 4d demonstrates said wires (18) in extended form at appropriate locations within a pair of sheets (11).

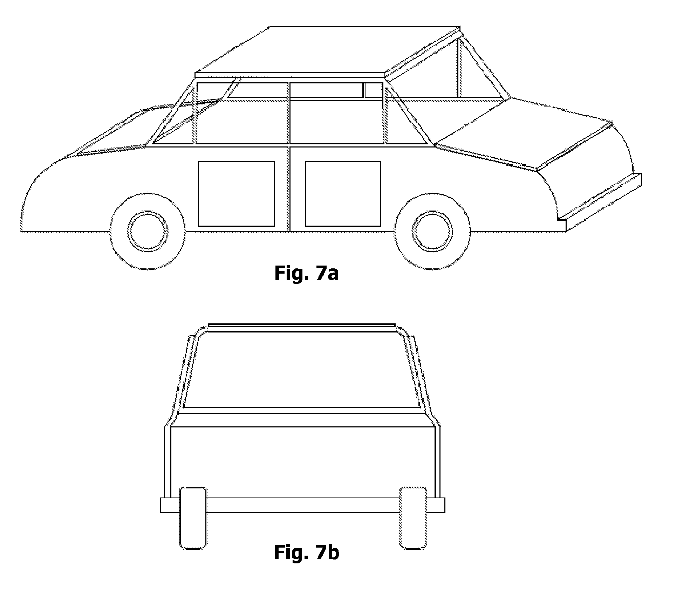

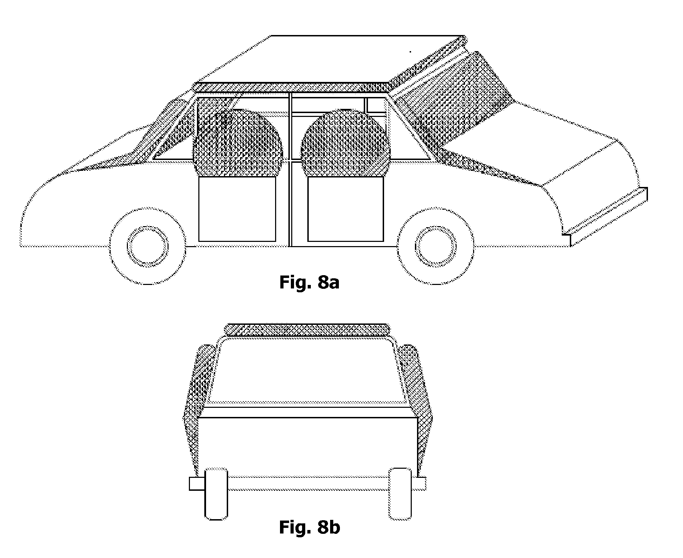

The system explained above may further comprise specially designed airbags adapted to be expanding to cover front, rear and side windows of a vehicle. This is illustrated in Figures 7 to 8 before and after activation of the system.

Fig. 3a shows mechanically conjoined cylindrical spring elements (15) of steel that are formed, heat-treated and pressed to be sandwiched between said sheet-like elements (11). Thermal treatment process is typically aiming at improving durability by heating steel into the austenitic crystal phase and then cooling quickly. Cylindrical spring elements (15) of Fig. 3a are conjoined at 16 by a rivet or spot weld. When pressed, each cylindrical spring element (15a) of Fig. 3a takes the form in Fig. 3b. Each half (15a1) of individual cylindrical element (15a) has a plurality of discontinuous channel portions (20) at each side to form, when superposed, a continuous channel (17) formed by discontinuous channel portions (20) of each half (15a1) in a successive manner. Said continuous channels (17) are then introduced a longitudinal pin (21) to maintain each half element (15a1) hinged at each side. This mutually hinged construction allows release of potential energy stored in the pressed cylindrical elements (15) during activation of the impact absorption and distribution shield system.

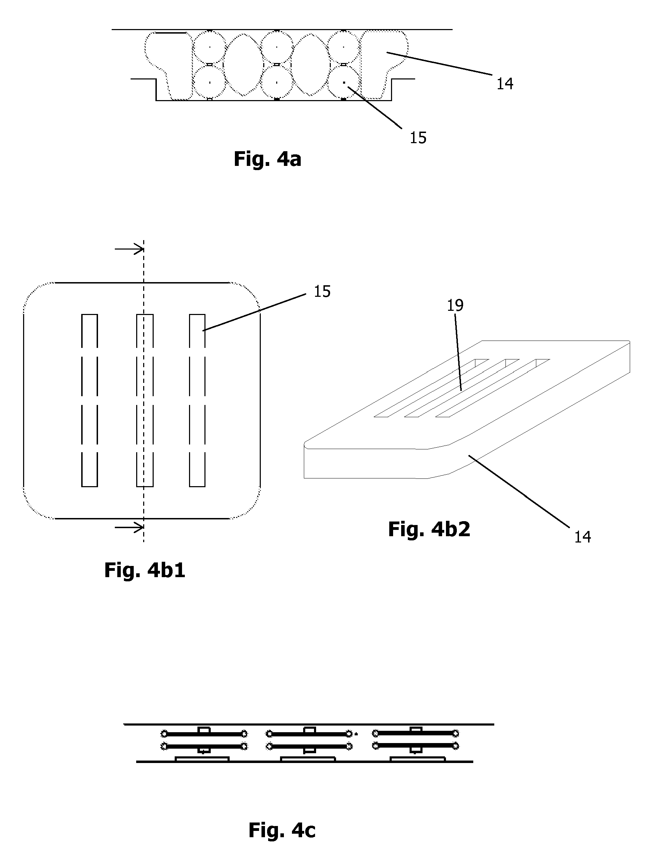

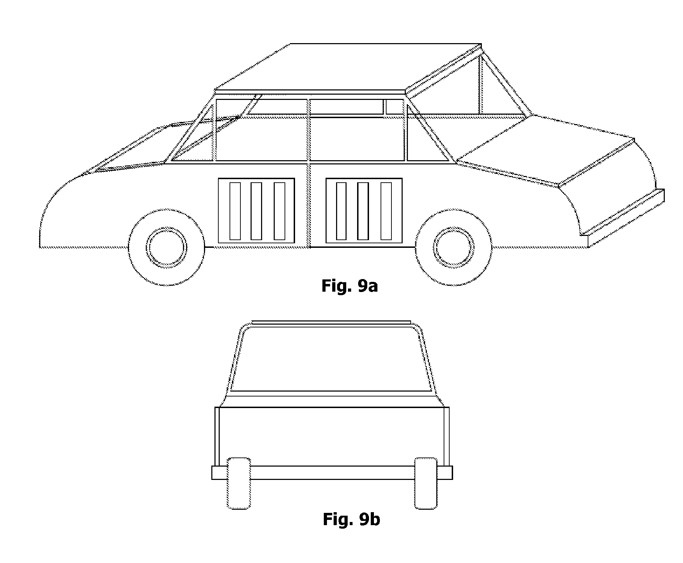

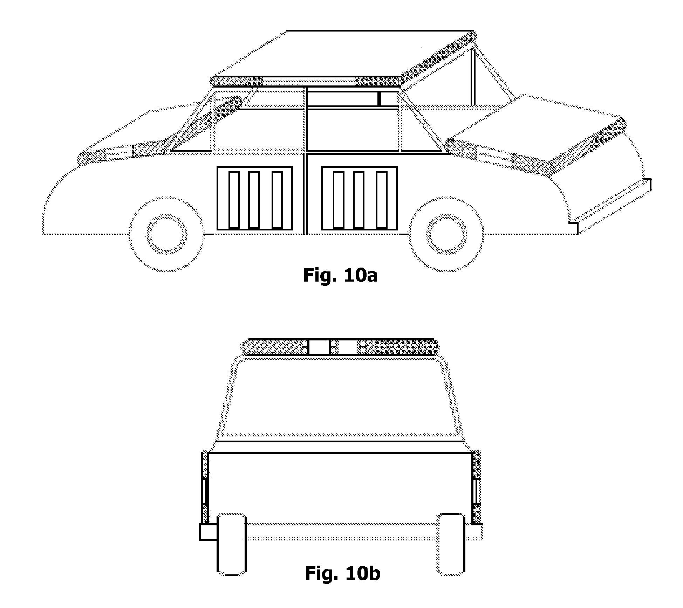

Fig. 4b shows upper view of a plurality of pressed cylindrical spring elements (15) arranged in rows. Appropriate hollow divisions (19) to accommodate said pressed spring elements (15) are demonstrated in Fig. 4b2. The spring system according to the present invention improves the absorption effect of the sheet-like panels in case of a car accident. Conjoined spring elements comprised of at least two individual spring body (15a, 15b) pressed and locked in pressed state and disposed within the inside of a pair of sheet-like elements (11) along with an airbag (14) provide an effective impact absorption and distribution shield on the chassis of a vehicle. A singular airbag body (14) specially designed to comprise corresponding spring element (15) apertures (19) into which said spring elements (15) are placed is schematically shown in Fig. 4a. Such a combined system is illustrated in Figures 9 to 10 before and after activation of the system.

According to the present invention, upper and lower sheet-like elements (11a, 11 b) are secured to each other by a locking mechanism, the unlocking of which is effected simultaneously with the activation of the airbag (14). At this very moment in which compressing effect is removed, pressed conjoined spring bodies (15a, 15b) expand as mutually hinged side parts (17) allow rotational expansion of each spring half (15a1, 15a2, 15b1, 15b2) so as to take the original form as in Fig. 3a.

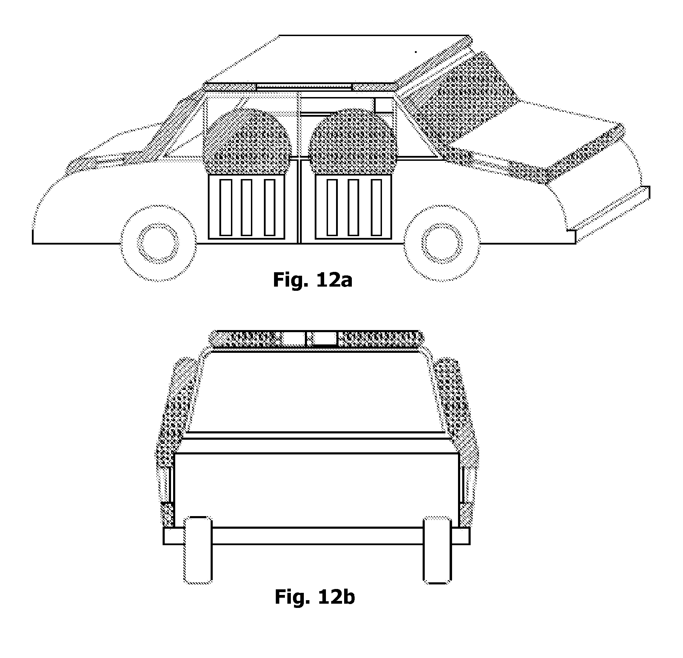

The locking mechanism, which can be applied electromechanically, pneumatically or hydraulically, can be arranged at singular or plural locations of each sandwich structure depending on the specific embodiment according to the present invention. For example, while the sandwich structures of the type hinged at one end as in Fig .2 (Figures 5 to 8) may require employment of a single locking mechanism, embodiments with no hinge (Figures 9 to 12 and ceiling structures in Figures 5 to 8) may require a plurality of locks.

A locking mechanism according to the present invention may preferably be in the form of a longitudinal member with an enlarged rotatable head portion projecting from a first sheet portion to be engaging into a corresponding slot on a second sheet portion. The precise angle of rotation to provide releasing of the enlarged head from the locking slot can be controlled by means of a mechanic reducer. The accuracy of the angle can be controlled by microswitches. The locking mechanisms as in Fig. 4f provide stability in non-deployed state. In addition, auto-releasable non-deployed state vibration damping and alignment means may be used in the form of conventional pins and corresponding slots on respective elements to fasten inner surfaces of said sheet-like elements (11). Such a mechanism (not shown) features a simple mechanical connection which is auto-releasable during activation of the system.

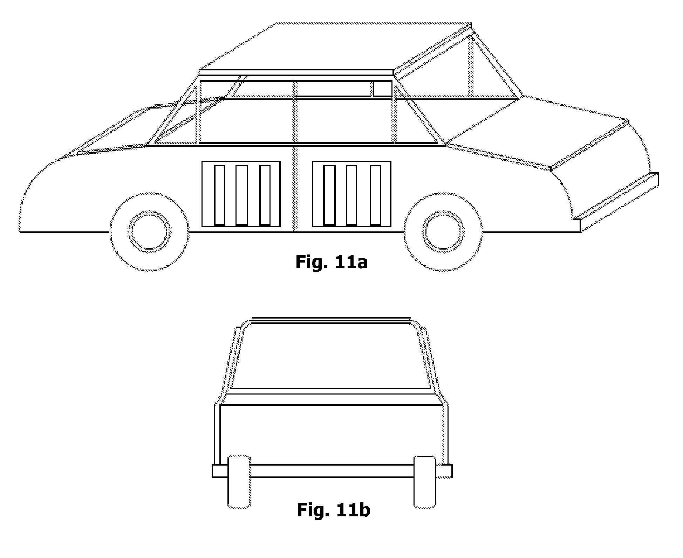

Figures 9 to 10 illustrate a combined spring-airbag system before and after activation. Figures 11 to 12 illustrate the same system with enlarged airbags. An embodiment solely based on spring bodies is not preferred as those are to produce vibration during drive.

The connection element (16) conjoining the two cylindrical spring bodies according to the present invention is arranged such that its elevation in pressed state ensure parallel disposition of all four half elements (15a1, 15a2, 15b1 and 15b2) as in Fig. 3b. This reduces the risk of self-releasing of compressed spring elements due to vibrations during driving and further provides that compressed state can be maintained with a minimum amount of force.

The present invention requires that a minimalist design approach be adopted bearing in mind basic engineering and material-specific limitations. The protective sheets (11) in pressed state must be disposed in a manner to minimize physical effects of the protective system to the existing design practices in terms of spacing considerations. In short, the present invention's protective sheets require a maximum height of 2 to 4 cm in pressed state. In the configuration indicated in Fig. 4c, it is possible to make a singular cylindrical element (15a) in pressed state fit into a height of 8 mm to one and half cm, therefore ensuring a space saving installation having minimal effect on existing design practices.

## Claims

1. A protective impact absorbing and distributing system installed on the chassis of a vehicle so as to follow the contour of the chassis surface, said protective system comprising a pair of sheet-like planar elements (11) one displacing with respect to the other so as to form at least one openable end (13) and an airbag (14) disposed within said sheet-like planar elements (11) and suitable for being activated and expanded in response to a signal output from a sensor so as to effect opening of said at least one openable end (13).

2. A protective impact absorbing and distributing system as in Claim 1 wherein said openable end (13) is rotatable around a hinged end (12).

3. A protective impact absorbing and distributing system as in Claim 1 or 2 wherein said sheet-like planar elements (11) comprise a plurality of combined spring units (15) extending parallel to said sheet-like planar elements (11) therebetween in pressed form.

4. A protective impact absorbing and distributing system as in Claim 3 wherein said combined spring units (15) is comprised of spring elements (15a, 15b) of identical form that are conjoined mechanically by a connection element (16), each of said elements (15a, 15b) having a pair of channels (17) at both ends thereof along the axis on which said sheet-like planar elements (11) extend.

5. A protective impact absorbing and distributing system as in Claim 4 wherein said spring elements (15a, 15b) comprise two halves (15a1, 15a2; 15b1, 15b2), each half (15a1, 15a2; 15b1, 15b2) having a plurality of discontinuous channel portions (20) at each side to form, when both halves (15a1, 15a2; 15b1, 15b2) are superposed, a continuous channel (17) formed by discontinuous channel portions (20) of each half (15a1, 15a2; 15b1, 15b2) in a successive manner.

6. A protective impact absorbing and distributing system as in Claim 5 wherein a longitudinal pin (21) is introduced into said continuous channels (17) to maintain each half element (15a1, 15a2; 15b1, 15b2) hinged at each side.

7. A protective impact absorbing and distributing system as in Claim 3 or 6 wherein said airbag (14) comprises hollow divisions (19) for accommodating said plurality of combined spring units (15) in rows in the pressed form.

8. A protective impact absorbing and distributing system as in Claim 3 wherein at least one locking mechanism secures said sheet-like elements (11) to each other.

9. A protective impact absorbing and distributing system as in Claim 8 wherein said locking mechanism is in the form of a longitudinal member with an enlarged rotatable head portion projecting from a first sheet portion to be engaging into a slot on a second sheet portion.

10. A protective impact absorbing and distributing system as in any of the Claims 4 to 9 wherein said spring elements (15a, 15b) are arranged such that the elevation of the connection element (16) in pressed state is substantially equal to the sum of the two diameters of said tangential channels (17) to ensure parallel disposition of all four half elements (15a1, 15a2, 15b1 and 15b2).

11. A protective impact absorbing and distributing system as in any of the previous Claims wherein said airbags (14) contain gas, liquid, gel, instant hardening foam or combinations thereof.

12. A protective impact absorbing and distributing system as in any of the previous Claims wherein said sheet-like planar elements (11) are made of steel, PVC, polyurethane or alloy composition of steel sheet material.

13. A protective impact absorbing and distributing system as in any of the previous Claims wherein said sheet-like planar elements (11) comprise steel wire meshes onto which said sheet-like elements (11) are directly implemented or injected.

14. A protective impact absorbing and distributing system as in any of the previous Claims wherein each of said sheet-like planar elements (11 a, 11 b) is bonded to the corresponding upper or lower sheet-like element (11 a, 11 b) by a plurality of wires (18) securing inner surfaces of a sheet (11a) pair to each other.

15. Method of producing a protective impact absorbing and distributing system comprising the steps of,
a) forming a planar sheet element into a circular cross-section semi-cylinder element (15a1, 15a2, 15b1, 15b2),
b) forming discontinuous channel portions (20) at both sides of said semi-cylinder elements (15a1, 15a2, 15b1, 15b2) so as to form, when a pair of said semi-cylinder elements (15a1, 15a2, 15b1, 15b2) are superposed, a continuous channel (17) formed by said discontinuous channel portions (20) in a successive manner,
c) conjoining a pair of cylindrical element (15a, 15b) obtained in step b) by a mechanical connection (16),
d) heat-treating and pressing the spring element (15) obtained in step c) to obtain a planar construction to be sandwiched between a pair of planar sheet-like elements (11).
